Europäisches Patentamt

(19) European Patent Office

Office européen des brevets

(11) Numéro de publication: **0 077 283**
A2

(12) # DEMANDE DE BREVET EUROPEEN

(21) Numéro de dépôt: **82440031.1**

(22) Date de dépôt: **30.09.82**

(51) Int. Cl.³: **G 02 C 5/12**

---

(30) Priorité: **12.10.81 FR 8119285**

(43) Date de publication de la demande: **20.04.83**
**Bulletin 83/16**

(84) Etats contractants désignés: **DE GB IT**

(71) Demandeur: **Zaber, Bernard, 9 rue Lefèbvre
Geispolsheim-Gare, F-67400 Illkirch-Graffenstaden (FR)**

(72) Inventeur: **Zaber, Bernard, 9 rue Lefèbvre
Geispolsheim-Gare, F-67400 Illkirch-Graffenstaden (FR)**

---

(54) **Dispositif pour assembler une plaquette de nez en matière naturelle osseuse avec une attache métallique.**

(57) Dispositif pour assembler une plaquette de nez en matière naturelle osseuse avec une attache métallique.

Le dispositif est constitué sur la face extérieure de la plaquette de nez en matière naturelle (2) d'une cavité (1) longitudinale en forme de T, décentré dans sa largeur et jusqu'à mi-longueur. Une lamelle métallique (4) de même profilé et dimensions que la rainure (3) de la cavité, formant glissière et munie de l'attache (5) est introduite avec une légère tension sur les parois jusqu'à emboîtement définitif.

Le dispositif selon l'invention est particulièrement déstiné pour la Lunetterie-Optique.

EP 0 077 283 A2

1

La présente invention concerne un dispositif pour assembler une plaquette de nez en matière naturelle osseuse avec une attache métallique. Cette attache avec l'ensemble de la plaquette est déstinée à être logé dans la partie correspondante du bras de plaquette d'une monture de lunette à ossature métallique, pour être fixé.

Le maintien de l'attache métallique avec la plaquette de nez est traditionnellement effectué par moulage et injection dans de la matière plastique.

La plaquette de nez est déstinée à servir de point d'apui sur le nez et est en contact direct avec la peau.

Dans de nombreux cas et spécialement ceux des allèrgies à la matière chimique plastique, l'utilisateur est contraint de recourir à la matière naturelle osseuse mais dont les systèmes d'attaches connus ne sont pas utilisables.

Le dispositif selon l'invention permet de remédier à cet inconvénient. Il se compose d'une cavité obtenue par fraisage en forme de T dans la face extérieure de la plaquette de nez et comporte une lamelle métallique de même profilé et dimensions que la rainure de la dite cavité, formant glissière. Cette lamelle métallique munie de son attache est introduite dans la rainure avec une légère pression sur les parois de façon à ce que la lamelle reste fixe après introduction complète.

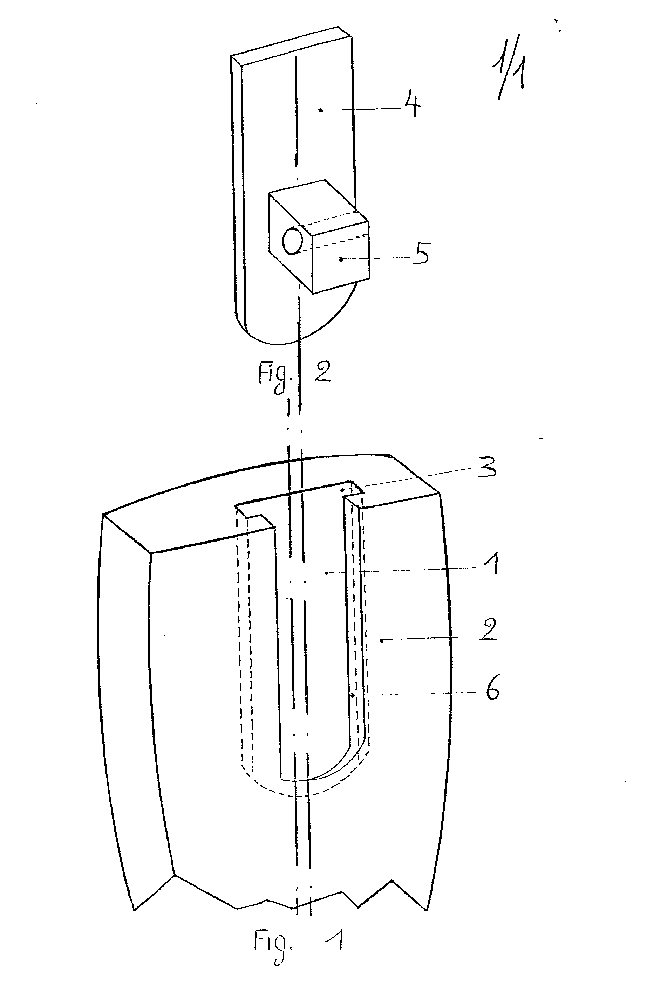

Les figures 1 et 2 représentent, en coupe, un dispositif selon l'invention.

Selon une forme extérieure de la plaquette, de réalisation préférentielles, la disposition de l'invention telle que repré senté sur la figure 1 comporte une cavité (1), creusée dans la matière osseuse (2) à partir de la face externe de la plaquette de nez, d'épaisseur inférieure à la dite matière osseuse. La longueur de la cavité est légèrement décentrée par rapport à l'axe médiane et représente un peu plus que le tiers de la matière osseuse.

La longueur de cette cavité en forme de T est de moitié de la longueur de la plaquette de nez et se termine en demi cercle suivant le rayon de l'outil de fraisage.

2

Cette cavité comportent une rainure (3) formant glissière, joue le rôle de logement pour une lamelle métallique (4) de même profilé et dimensions qu'elle.

La lamelle métallique (4) telle que représentée sur la figure 2 est munie d'une attache (5) fixée par soudage ou dans la masse. Cette lamelle sera introduite avec précision et avec une légère tension sur les parois jusqu'au fond de la cavité. Cette dernière comprend une entaille (6) suivant la dimension de l'attache et permet le passage de celle-ci.

3

REVENDICATION

1) Plaquette de nez caractérisé par le fait qu'elle est rendue solidaire de la lunette au moyen d'une lamelle métallique (4) s'emboîtant dans une cavité (1) de même profilé et dimensions que celle-ci, creusée dans la dite plaquette en matière osseuse(2)

2) Plaquette de nez selon la revendication 1 caractérisé par le fait que la cavité (1) est en forme de T.

3) Plaquette de nez selon la revendication 1 caractérisé par le fait que la lamelle métallique (4) porte une attache (5) soudé ou dans la masse.

4) Plaquette de nez selon la revendication 1 et 2 caractérisé par le fait que la longueur de la cavité (1) est la moitié de celle de la plaquette

5) Plaquette de nez selon les revendications 1,2 et 3 prises dans leur ensemble, caractérisé par le fait que la largeur de la cavité est un peu plus le tiers de celle de la plaquette

1/1

Fig. 2

Fig. 1